# EUROPÄISCHE PATENTSCHRIFT

(11) **EP 1 616 430 B1**
(45) Veröffentlichungstag und Bekanntmachung des Hinweises auf die Patenterteilung: **08.06.2011**
(21) Anmeldenummer: 04726159.9
(22) Anmeldetag: 07.04.2004
(51) Int. Cl.: H04M 1/725

(54) **VERFAHREN ZUM ERSTELLEN EINES NUTZERPROFILS BEZUEGLICH DER AUSWAHL VON MENUEPUNKTEN DES MOBILFUNKENDGERAETS**
METHOD FOR CREATING A MOBILE RADIO TERMINAL USER PROFILE
PROCEDE POUR ETABLIR UN PROFIL D'UTILISATEUR DE TERMINAL RADIOTELEPHONIQUE MOBILE

(30) Priorität: 15.04.2003 DE 10317438
(43) Veröffentlichungstag der Anmeldung: 18.01.2006
(73) Patentinhaber: Vodafone Holding GmbH, 40213 Düsseldorf (DE)
(72) Erfinder: KLEMENS, Gaida, 40213 Düsseldorf (DE); STEIN, Silke, 64683 Einhausen (DE)
(74) Vertreter: Weisse, Renate
(86) Internationale Anmeldenummer: PCT/EP2004/003729
(87) Internationale Veröffentlichungsnummer: WO 2004/093473

(56) Entgegenhaltungen:
- EP-A- 0 891 066
- EP-A- 1 094 410
- US-A- 5 396 264
- US-A1- 2002 142 792
- US-B1- 6 263 217

## Beschreibung

### Technisches Gebiet

Die Erfindung betrifft ein Verfahren zum Erstellen eines Nutzerprofils eines Mobilfunkendgerätenutzers, welcher ein Mobilfunkendgerät mit einer menügeführten Anzeige verwendet, wobei gewünschte Menüpunkte mit einer Steuereinheit des Mobilfunkendgerätes ausgewählt werden *mit folgenden Verfahrensschritten*
*a) Speichern eines Nutzungsverhaltens des Mobilfunkendgerätenutzers bei der Auswahl der Menüpunkte in einer Speichereinheit zur Erstellung und Auswertung des Nutzerprofils,*
b) *Erstellen und Verwalten des Nutzerprofils des Mobilfunkendgerätenutzers in einer zentralen Verwaltungseinheit eines Mobilfunknetzbetreibers und*
*c) Anpassen der Menüpunkte individuell für den Mobilfunkendgerätenutzer entsprechend dem Nutzerprofil in der zentralen Verwaltungseinheit.*
*d) Anpassen und Regulieren des Nutzerprofils in der zentralen Verwaltungseinheit durch den Mobilfunkendgerätenutzer.*

### Stand der Technik

Mit Mobilfunkendgeräten, wie z.B. Handys, können Teilnehmer über ein Mobilfunknetz miteinander kommunizieren. Mobilfunknetze nach dem GSM- bzw. UMTS-Standard sind bereits seit langem bekannt und werden in zahlreicher Literatur beschrieben, beispielsweise in dem Lehrbuch "GSM Global System for Mobile Communication", J. Ebersbpächer / H.- J. Vögel 2. Auflage erschienen im B.G. Teubner-Verlag Stuttgart-Leipzig.

Es ist wünschenswert, den Teilnehmern bzw. Nutzern von Mobilfunknetzen die Bedienung von Mobilfunkendgeräten möglichst leicht zu machen. Die Mobilfunkendgeräte werden daher über Menüs bedient. Die Funktionen des Mobilfunkendgeräts werden über eine Anzeige als Menü dargestellt, von dem sich der Nutzer den gewünschten Menüpunkt mit Hilfe der Tastatur des Mobilfunkendgeräts oder sprachgesteuert aussuchen kann.

Mittlerweile lassen sich nicht nur Funktionen des Mobilfunkendgeräts über das Menü abrufen, sondern auch Dienstleistungen, wie beispielsweise Verkehrsinformationen, Sportnachrichten, Hotelführer etc. Diese Dienstleistungen werden von entsprechenden Dienstleistern im Mobilfunknetz angeboten.

Jeder Mobilfunkteilnehmer wird auf seine Weise eigene Gewohnheiten zum Aufrufen bestimmter Menüpunkte haben, um Funktionen des Mobilfunkendgeräts oder Dienstleistungen in Anspruch zu nehmen. Wegen einheitlicher Menüführungen sind die Menüs nicht individuell an den einzelnen Benutzer angepasst. Ein Benutzer wird daher nicht selten durch die gesamte Menüstruktur hindurch steuern müssen, um an einen gewünschten Menüpunkt zu gelangen.

*Die Druckschrift* EP 1 094 410 A2 *offenbart den Zugriff von Datenendgeräten auf ein Kommunikationssystem, welches eine Fülle von Funktionen anbietet, auf die ein Benutzer zugreifen kann. Je nachdem welche Funktionen von Benutzern der Datenendgeräte angesteuert werden, erfolgt eine Hierarchisierung der Funktionen in dem Kommunikationssystem. Besonders oft angesteuerte Funktionen stehen damit ganz oben in der Auswahl und ermöglichen den Nutzern ein schnelles Zugreifen darauf. Das Kommunikationssystem fungiert dabei als Verwalter und sortiert die eingehenden Funktionsabfragen durch die Benutzer der Datenendgeräte*

*Das US-Patent* US 5.396.264 *beschreibt eine tragbare Informationsanzeige, beispielsweise einen Pager, deren Funktionen durch Ansteuerung der Benutzer hierarchisiert werden. Eine individuelle Gestaltung der Funktionsanzeige ist nur dadurch zu erreichen, dass oft angewählte Funktionen in der Hierarchie nach oben steigen.*

*Die* US 6.263.217 B1 *beschreibt Mobilfunkendgeräte, deren Menüsteuerung als Menübaum aufgebaut ist, d.h. nach Anwahl eines Menüs erscheint ein Untermenü. Der Benutzer wählt je nach Bedarf Menüpunkte aus dem Mobilfunkendgerät aus. Die Häufigkeit der angewählten Menüpunkte wird in dem Mobilfunkendgerät gespeichert und entsprechend der Häufigkeit der Ansteuerung ein Menübaum aufgebaut. Der Aufbau des Menübaums erfolgt auch hier innerhalb des Mobilfunkendgeräts durch Anwahl der Menüpunkte, die daraufhin in der Hierarchisierung nach oben gelangen.*

*Die* US 2002 0142 792 A1 *beschreibt eine Methode der automatischen Auswahl bestimmter Einstellungen eines Mobilfunkendgerätes abhängig vom momentanen Aufenthaltsort des Benutzers. Erkennt das Mobilfunkendgerät beispielsweise einen Wechsel vom privaten Netzwerk in ein öffentliches Netzwerk, werden dem Benutzer unterschiedliche Systemeinstellungen angeboten.*

*Die* EP 0 891 066 A2 *offenbart ein tragbares, elektronisches Eingabegerät, dessen Menüanwendungen je nach Häufigkeit der Ansteuerung in der Hierarchie nach oben gesetzt werden. Dabei kann das Profil der Menüanwendungen entweder nach Häufigkeit der angewählten Menüpunkte automatisch vorgeben werden oder der Benutzer ändert manuell unter Benutzung von Schlüsselkommandos den Inhalt der Menü.*

### Offenbarung der Erfindung

Aufgabe der Erfindung ist es daher, die Bedienung des Mobilfunkendgeräts komfortabler für den Benutzer auszugestalten.

Erfindungsgemäß wird die Aufgabe bei einem Verfahren der eingangs genannten Art *gelöst durch*
*e)*. *Speichern des momentanen Aufenthaltsorts des Mobilfunkendgerätenutzers bei Auswahl eines Menüpunkts als Ortskoordinate und Zuordnen des momentanen Attfenthaltsorts dem ausgewählten Menüpunkt zum Erstellen des Nutzerprofils.*

Vorteilhafterweise wird in einer besonderen Ausbildung des erfindungsgemäßen Verfahrens die Auswahlhäufigkeit der angewählten Menüpunkte gespeichert. Erfindungsgemäß werden die jeweiligen Aufenthaltsorte des Nutzers als Koordinaten gespeichert um ein geeignetes Nutzerprofil zu erstellen. Jedem ausgewählten Menüpunkt wird eine Ortskoordinate zugeordnet. Hält sich ein Benutzer wiederholt an einem Ort auf, kann ihm beispielsweise ein zuvor an diesem Ort gewählter Menüpunkt in einer leicht erreichbaren Position erneut angeboten werden.

Erfindungsgemäß kann der Mobilfunkendgerätenutzer das Nutzerprofil selber anpassen und regulieren. Durch diese Maßnahme ist es dem Mobilfunkendgerätenutzer möglich, auf das Nutzerprofil Einfluss zu nehmen und nach seinen Bedürfnissen anzupassen.

Erfindungsgemäß wird das Nutzerprofil des Mobilfunkendgerätenutzers in einer zentralen Verwaltungseinheit eines Mobilfunknetzbetreibers verwaltet.

In einer bevorzugten Ausbildung des erfindungsgemäßen Verfahrens werden Nutzungsdaten bezüglich der Auswahl der Menüpunkte ganz oder teilweise in dem Mobilfunkendgerät gespeichert und zur Auswertung über das Mobilfunknetz an die zentrale Verwaltungseinheit übermittelt.

Eine weitere vorteilhafte Ausgestaltung des erfindungsgemäßen Verfahrens ergibt sich, wenn verschiedene Nutzerprofile erstellt werden. Durch diese Maßnahme kann z.B. ein Nutzerprofil für die Arbeit, eines für die Freizeit und ein weiteres für den Urlaub verwendet werden. Es besteht aber auch die Möglichkeit Nutzerprofile für andere Personen zu erstellen, denen man das Mobilfunkendgerät zur Verfügung stellt, wie es häufiger in Firmen vorkommt.

Durch Zuordnen des Zeitpunkts, an dem ein Menüpunkt ausgewählt wurde, können einem Benutzer eines Mobilfunkendgeräts Menüpunkte, die nur zu bestimmten Zeiten verwendet werden, in eine leicht erreichbare Menüposition gebracht werden.

Um ein oder auch mehrere Nutzerprofile einem bestimmten Teilnehmer zuordnen zu können, werden in einer bevorzugten Ausbildung des erfindungsgemäßen Verfahrens den ausgewählten Menüpunkten Personendaten des Mobilfünkendgerätenutzers zugeordnet und gespeichert.

Weitere Vorteile ergeben sich aus dem Gegenstand der Unteransprüche und den Zeichnungen mit den dazugehörigen Beschreibungen.

### Kurze Beschreibung der Zeichnung

- Fig. 1: zeigt in einer schematischen Prinzipskizze ein erfindungsgemäßes Verfahren.
- Fig.2: zeigt in einer Prinzipskizze einen Datensatz eines Mobilfunkteilnehmers mit Nutzerprofil.

### Bevorzugtes Ausführungsbeispiel

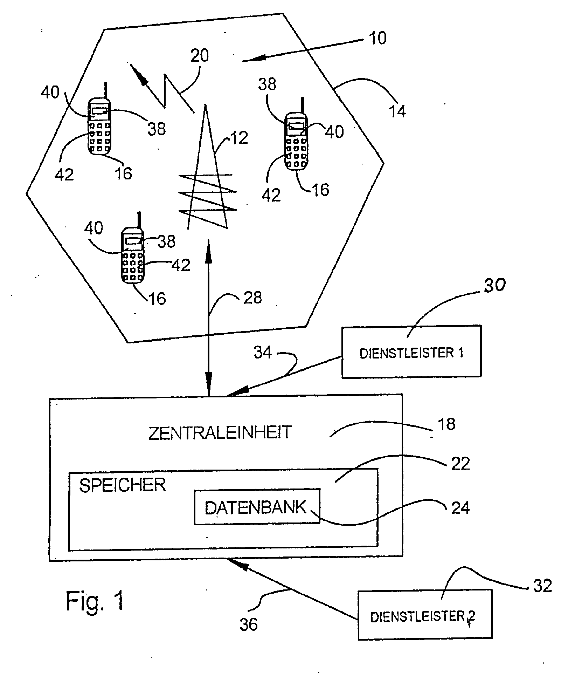

In Fig. 1 wird mit 10 ein Mobilfunknetz bezeichnet. Das Mobilfunknetz 10 wird durch einen Sendemast 12, eine sechseckige Wabe 14 und Mobilfunkendgeräte 16 verbildlicht. Dabei symbolisiert die Wabe 14 den durch das Mobilfunknetz 10 abgedeckten territorialen Bereich. Teilnehmer im Mobilfunknetz 10 werden durch die Mobilfunkendgeräte 16 symbolisiert.

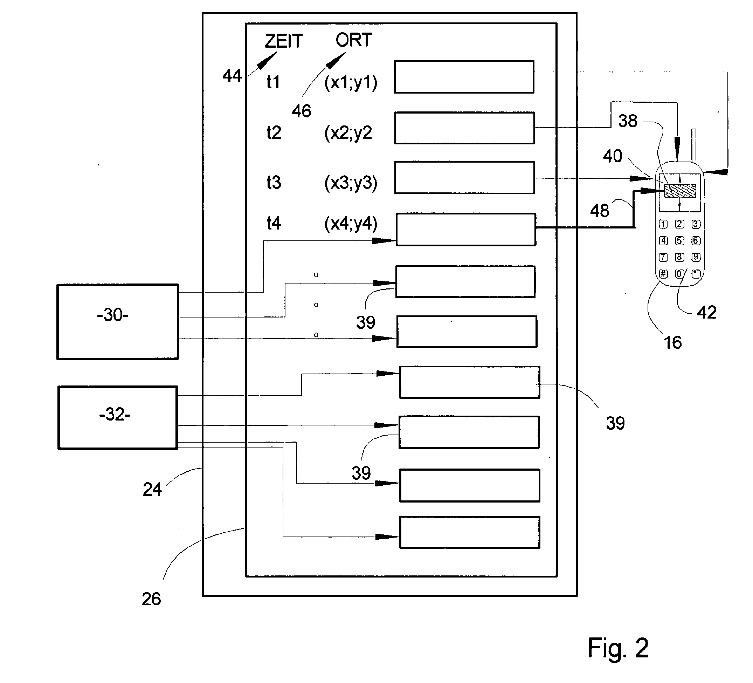

In einer computergestützten Zentraleinheit 18 findet insbesondere die Verwaltung der Mobilfunkteilnehmer 16 und die Vermittlung von Kommunikationswünschen in dem Mobilfunknetz 10 statt. Über Funk - Pfeil 20 - vermittelt das Mobilfunknetz 10 Kommunikationsanfragen durch Mobilfunkteilnehmer Die Zentraleinheit 18 weist einen Speicher 22 auf, in dem eine geeignete Datenbank 24 in digitaler Form abgespeichert ist. In der Datenbank 24 liegen alle teilnehmerbezogenen Daten als Datensatz 26 vor, vgl. hierzu Fig. 2.

Pfeil 28 deutet die bidirektionale Verbindung der Zentraleinheit 18 über die Sendemasten 12 zu den Mobilfunkendgeräten 16 an. Jeder Mobilfunkteilnehmer kann mit seinem Mobilfunkendgerät 16 entweder Dienstleistungen von Dienstleistern 30, 32 oder individuell Funktionen des Mobilfunkendgeräts 16 abrufen. Die Dienstleister 30, 32 speisen dazu ihre Dienstleistungen, wie z.B. Verkehrs-, Fluginformationen oder Hotelführer, über die Zentraleinheit 18 in das Mobilfunknetz 10 ein, Pfeile 34, 36.

Die Mobilfunkendgerätefunktionen und die Dienstleistungen der Dienstleister 30, 32 lassen sich jeweils über ein Menü 38 mit hierarchischer Struktur abrufen. Das Menü 38 besteht aus Menüpunkten 39 und wird auf einer Anzeige 40 dargestellt. Mit der Tastatur 42 oder Sprachsteuerung lässt sich in dem Menü 38 durch mehrere Menüebenen navigieren, um die gewünschten Menüpunkte 39 auszuwählen. Die Menüs 38 werden zentral in der computergesteuerten Zentraleinheit 18 bearbeitet und verwaltet.

Jeder Mobilfunkteilnehmer hat andere Gewohnheiten. Die Mobilfunkteilnehmer werden daher auch unterschiedliche Menüpunkte 39 bevorzugen. Das Nutzungsverhalten bzgl. der Auswahl von Menüpunkten der verschiedenen Mobilfunkteilnehmer wird daher sehr individuell ausfallen. Dieses Nutzungsverhalten wird daher von jedem einzelnen Mobilfunkteilnehmer in dem Speicher 22 in einem Datensatz 26 der Datenbank 24 gespeichert. Ein Kriterium für das Nutzungsverhalten ist die Auswahlhäufigkeit für bestimmte Menüpunkte 39. Nach einer Auswertung des Nutzungsverhaltens der Mobilfunkteilnehmer durch die Zentraleinheit 18 kann das Menü 38 individuell auf jeden Mobilfunkteilnehmer als Nutzerprofil angepasst werden. Das individuell für einen Mobilfunkteilnehmer angepasste Menü 38 entspricht dem Nutzerprofil.

Auf diese Weise erhält jeder Mobilfunkteilnehmer ein Menü, was möglichst auf seine Bedürfnisse zugeschnitten ist. Dieses Nutzerprofil lässt sich durch den Mobilfunkteilnehmer jederzeit ändern oder gar ganz bzw. teilweise löschen. Im Falle, dass es vollständig gelöscht wurde, wird ein vorgegebenes Urmenü auf der Anzeige 40 dargestellt. Das Nutzerprofil ist grundsätzlich variabel und ändert sich insbesondere auch nach zeitlichen oder örtlichen Gesichtspunkten. Für einen Mobilfunkteilnehmer können auch mehrere Nutzerprofile angelegt werden. So kann beispielsweise ein Nutzerprofil für die Arbeit, eines für die Freizeit und eines für den Urlaub, verwendet werden.

In Fig. 2 wird in einer Prinzipskizze ein Datensatz 26 der Datenbank 24 dargestellt. Der Datensatz 26 enthält insbesondere die bevorzugten Menüpunkte 39. Jedem Menüpunkt 39 ist eine Funktion des Mobilfunkendgeräts 16 oder eine Dienstleistung der Dienstleister 30, 32 zugeordnet. Der Datensatz 26 enthält zu jedem Menüpunkt 39 eine Zeit- 44 und eine Ortsangabe 46. Die Zeitangabe 44 wird mit t1, t2, t3, ... bezeichnet für die eine beliebige Zeit eingesetzt werden kann, wann z.B. das Menü in der Anzeige 40 des Mobilfunkendgeräts 16 erscheinen soll, Pfeil 48. Entsprechend kann vorgesehen sein, dass ein bestimmtes Menü 39 erst an einem bestimmten Ort 46 erscheint. Die Koordinaten werden hier mit (x1, y1); (x2, y2); (x3, y3); ... bezeichnet

Die Nutzerprofile lassen sich entweder weitestgehend automatisch durch die Zentraleinheit 18 oder durch den Mobilfunknutzer erstellen. Für die automatische Erstellung des Nutzerprofils ist das Nutzungsverhalten des Teilnehmers erforderlich, welches gespeichert und ausgewertet wird. Das Nutzungsverhalten kann grundsätzlich zunächst in dem Mobilfunkendgerät 16 selbst zwischengespeichert werden und nur zu bestimmten Zeitpunkten, beispielsweise bei geringer Auslastung des Mobilfunknetzes 10, an die Zentraleinheit 18 übermittelt werden.

## Patentansprüche

1. Verfahren zum Erstellen eines Nutzerprofils eines Mobilfunkendgerätenutzers, welcher ein Mobilfunkendgerät (16) mit einer menügeführten Anzeige (40) verwendet, wobei gewünschte Menüpunkte (39) mit einer Steuereinheit (42) des Mobilfunkendgerätes (16) ausgewählt werden, *mit folgenden Verfahrensschritten*
*a) Speichern eines Nutzungsverhaltens des Mobilfunkendgerätenutzers bei der* Auswahl der Menüpunkte (39) *in einer Speichereinheit (22)* zur Erstellung und Auswertung des Nutzerprofils,
*b) Verwalten des Nutzerprofils des Mobilfunkendgerätenutzers in einer zentralen Venvaltungseinheit (18) eines Mobilfunknetzbetreibers und*
*c) Anpassen der Menüpunkte (39) individuell für den Mobilfunkendgerätenutzer entsprechend dem Nutzerprofil in der zentralen Verwaltungseinheit (18),*
*d) Anpassen und Regulieren des Nutzerprofils in der zentralen Verwaltungseinheit (18) durch den Mobilfunkendgerätenutzer,*
***gekennzeichnet durch***
*e) Speichern des momentanen Aufenthaltsorts (46) des Mobilfunkendgerätenutzers bei Auswahl eines Menüpunkts als Ortskoordinate und Zuordnen des momentanen Aufenthaltsorts dem ausgewählten Menüpunkt (39) zum Erstellen des Nutzerprofils.*

2. Verfahren zum Erstellen eines Nutzerprofils eines Mobilfunkendgerätenutzers nach *Anspruch 1,* **dadurch gekennzeichnet, dass** Nutzungsdaten *bezüglich der Auswahl der Menüpunkte (39)* ganz oder teilweise in dem Mobilfunkendgerät (16) gespeichert und zur Auswertung über das Mobilfunknetz an die zentrale Verwaltungseinheit übermittelt werden.

3. Verfahren zum Erstellen eines Nutzerprofils eines Mobilfunkendgerätenutzers nach einem der Ansprüche 1 bis 2, **dadurch gekennzeichnet, dass** verschiedene Nutzerprofile erstellt werden.

4. Verfahren zum Erstellen eines Nutzerprofils eines Mobilfunkendgerätenutzers nach einem der Ansprüche 1 bis 3, **dadurch gekennzeichnet, dass** die Auswahlhäufigkeit der angewählten Menüpunkte (39) gespeichert wird.

5. Verfahren zum Erstellen eines Nutzerprofils eines Mobilfunkendgerätenutzers nach einem der Ansprüche 1 bis 4, **dadurch gekennzeichnet, dass** *der Zeitpunkt bei Auswahl eines Menüpunktes (39)* gespeichert und dem ausgewählten Menüpunkt zugeordnet wird.

6. Verfahren zum Erstellen eines Nutzerprofils eines Mobilfunkendgerätenutzers nach einem der Ansprüche 1 bis 5, **dadurch gekennzeichnet, dass** den ausgewählten Menüpunkten Personendaten des Mobilfunkendgerätenutzers zugeordnet und gespeichert werden.

## Claims

1. Method for creating a user profile of a mobile terminal user using a mobile terminal (16) with a menu-driven display (40), wherein desired menu items (39) are selected with a control unit (42) of the mobile terminal (16), comprising the steps of
a) storing a usage behaviour of the mobile terminal user when selecting the menu items (39) in a storage unit (22) for creation and evaluation of the user profile,
b) administrating the user profile of the mobile terminal user in a central administration unit (18) of a mobile radio network operator, and
c) adjusting the menu items (39) individually to the mobile terminal user in accordance with the user profile in the central administration unit (18),
d) adjusting and administrating the user profile in the central administration unit (18) by the mobile terminal user,
**characterized by**
e) storing the current location (46) of the mobile terminal user when selecting a menu item as a spatial coordinate and assigning the current location to the selected menu item (39) for creating the user profile.

2. Method for creating a user profile of a mobile terminal user according to claim 1, **characterized in that** usage data concerning the selection of the menu items (39) is stored in whole or in part in the mobile terminal (16) and is transmitted via the mobile radio network to the central administration unit for evaluation.

3. Method for creating a user profile of a mobile terminal user according to claim 1 or 2, **characterized in that** different user profiles are created.

4. Method for creating a user profile of a mobile terminal user according to any of claims 1 to 3, **characterized in that** the selection frequency of the selected menu items (39) is stored.

5. Method for creating a user profile of a mobile terminal user according to any of claims 1 to 4, **characterized in that** the point in time when selecting a menu item (39) is stored and assigned to the selected menu item.

6. Method for creating a user profile of a mobile terminal user according to any of claims 1 to 5, **characterized in that** personal data of the mobile terminal user is assigned to the selected menu items and stored.

## Revendications

1. Procédé destiné à établir un profil d'utilisateur d'un utilisateur de terminal de radiotéléphonie mobile qui utilise un terminal de radiotéléphonie mobile (16) muni d'un affichage (40) guidé par menu, les points de menu (39) souhaités étant sélectionnés à l'aide d'une unité de commande (42) du terminal de radiotéléphonie mobile (16), comprenant les étapes de procédé suivantes :
(a) mémorisation d'un comportement d'utilisation de l'utilisateur de terminal de radiotéléphonie mobile lors de la sélection des points de menu (39) dans une unité de mémorisation (22) pour l'établissement et l'évaluation du profil d'utilisateur,
(b) gestion du profil d'utilisateur de l'utilisateur de terminal de radiotéléphonie mobile dans une unité de gestion centralisée (18) d'un exploitant de réseau de radiophonie mobile et
(c) adaptation personnalisée des points de menu (39) pour l'utilisateur de terminal de radiotéléphonie mobile en fonction du profil d'utilisateur dans l'unité de gestion centralisée (18),
(d) adaptation et réglage du profil d'utilisateur dans l'unité de gestion centralisée (18) par l'utilisateur du terminal de radiotéléphonie mobile,
**caractérisé par**
(e) la mémorisation de la localisation géographique momentanée (46) de l'utilisateur de terminal de radiotéléphonie mobile lors de la sélection d'un point de menu sous forme de coordonnées géographiques et affectation de la localisation géographique momentanée au point de menu (39) sélectionné afin d'établir le profil d'utilisateur.

2. Procédé destiné à établir un profil d'utilisateur d'un utilisateur de terminal de radiotéléphonie mobile selon la revendication 1, **caractérisé en ce que** des données d'utilisation se rapportant à la sélection des points de menu (39) sont mémorisées dans leur totalité ou en partie dans le terminal de radiotéléphonie mobile (16) et transmises à l'unité de gestion centralisée en vue de l'évaluation via le réseau de radiotéléphonie mobile.

3. Procédé destiné à établir un profil d'utilisateur d'un utilisateur de terminal de radiotéléphonie mobile selon l'une quelconque des revendications 1 ou 2, **caractérisé en ce que** différents profils d'utilisateur sont établis.

4. Procédé destiné à établir un profil d'utilisateur d'un utilisateur de terminal de radiotéléphonie mobile selon l'une quelconque des revendications 1 à 3, **caractérisé en ce que** la fréquence de sélection des points de menu (39) sélectionnés est mémorisée.

5. Procédé destiné à établir un profil d'utilisateur d'un utilisateur de terminal de radiotéléphonie mobile selon l'une quelconque des revendications 1 à 4, **caractérisé en ce que** le moment de la sélection d'un point de menu (39) est mémorisé et affecté au point de menu sélectionné.

6. Procédé destiné à établir un profil d'utilisateur d'un utilisateur de terminal de radiotéléphonie mobile selon l'une quelconque des revendications 1 à 5, **caractérisé en ce que** des données personnelles concernant l'utilisateur de terminal de radiotéléphonie mobile sont affectées aux points de menu sélectionnés et mémorisées.
